# EUROPÄISCHE PATENTSCHRIFT

(11) **EP 3 354 501 B1**
(45) Veröffentlichungstag und Bekanntmachung des Hinweises auf die Patenterteilung: **19.08.2020**
(21) Anmeldenummer: 17200045.7
(22) Anmeldetag: 06.11.2017
(51) Int. Cl.: B60J 10/24, B60J 10/32, B60J 10/80

(54) **DICHTUNG, INSBESONDERE AN TÜREN, KLAPPEN ODER/UND FENSTERN VON FAHRZEUGKAROSSERIEN**
SEAL, IN PARTICULAR ON DOORS, FLAPS OR/AND THE WINDOWS OF VEHICLE BODIES
JOINT D'ÉTANCHÉITÉ, EN PARTICULIER AUX PORTES, AUX ABATTANTS ET/OU AUX FENÊTRES DE CARROSSERIES DE VÉHICULE

(30) Priorität: 07.11.2016 DE 102016121176
(43) Veröffentlichungstag der Anmeldung: 01.08.2018
(73) Patentinhaber: CQLT SaarGummi Technologies S.à.r.l., 5544 Remich (LU)
(72) Erfinder: Tessier, Bernard, 45270 Moulon (FR); Grüter, Achim, 66780 Rehlingen-Siersburg (DE); Schumacher, Volker, 66839 Schmelz (DE)
(74) Vertreter: Patentanwälte Bernhardt / Wolff Partnerschaft mbB

(56) Entgegenhaltungen:
- WO-A1-2009/126684
- DE-A1- 19 805 610
- DE-A1-102005 042 460

## Beschreibung

Die Erfindung betrifft eine Dichtung, insbesondere an Türen, Klappen oder/und Fenstern von Fahrzeugkarosserien, mit einem elastisch verformbaren Dichtungselement und einem Aktor zur ferngesteuerten Verformung des Dichtungselements.

In bestimmten Betriebssituationen, wie beim Schließen von Fahrzeugtüren oder -fenstern, kommt es stellenweise zu verstärktem Verschleiß, dem durch geeignete Verformung des Dichtungselements an den betreffenden Stellen vorgebeugt werden kann. Zur ferngesteuerten Verformung von Fahrzeugdichtungen werden herkömmlich elektromechanische Aktoren eingesetzt, durch die z.B. eine Dichtungslippe lokal verformt wird. Schlauchförmige Dichtungsabschnitte lassen sich alternativ durch Variation des Innendrucks mehr oder weniger stark aufweiten.

Aus der WO 2009/156684 A1 ist eine hohle Dichtung bekannt, in welcher ein Aktor umfassend ein Schaltelement aus Formgedächtnismaterial und längliche Aktorelemente in Form von elastisch biegbaren seitlichen Wandungen vorgesehen ist. Durch das Schaltelement kann der Aktor zwischen zwei stabilisierten Aktorstellungen umgeschaltet werden, um die Dichtung zu verformen. Aus DE 10 2005 042 460 A1 und DE 198 05 610 A1 sind weitere Dichtungen bekannt, welche mittels Formgedächtnismaterialien verformbar sind.

Durch die Erfindung wird eine neue Dichtung der eingangs erwähnten Art geschaffen, die dadurch gekennzeichnet ist, dass sich die Aktorelemente in Längsrichtung des Dichtungselements erstrecken und jeweils in zwei zueinander im Abstand angeordneten Längspositionen gehalten sind, wobei der Abstand zwischen den Längspositionen kleiner als die Länge der zwischen den Längspositionen gebogen verlaufenden Aktorelemente ist.

Ein Formgedächtnismaterial dient erfindungsgemäß nur zur Bildung eines Schaltelements, das für eine Umschaltung der Aktorstellungen sorgt. In den stabilen Aktorstellungen selbst bedarf es vorteilhaft keiner Aktivierung des Formgedächtnismaterials.

In einer bevorzugten Ausführungsform der Erfindung ist das Schaltelement als durch Beheizung verkürzbarer Zugstrang ausgebildet, insbesondere drahtförmiger Zugstrang.

Vorzugsweise weist der Aktor mehrere, für unterschiedliche Umschaltrichtungen vorgesehene Schaltelemente aus Formgedächtnismaterial auf. Durch ein oder mehrere Schaltelemente kann eine Umschaltung von einer ersten Aktorstellung in eine zweite Aktorstellung erfolgen, während durch ein anderes oder mehrere andere Schaltelemente eine Umschaltung von der zweiten wieder in die erste Aktorstellung möglich ist.

In weiterer Ausgestaltung der Erfindung umfasst der Aktor zwei, durch das Schaltelement in entgegengesetzten Richtungen bewegbare Aktorelemente.

Vorzugsweise ist das Aktorelement an den Längspositionen um eine zur Längsrichtung senkrechte Achse drehbar gelagert, wobei das Schaltelement in geeignetem Abstand von der Achse mit dem Aktorelement verbunden ist.

In weiterer Ausgestaltung der Erfindung sind zwei auf jeweils einer Seite der Achse im Abstand von der Achse an dem Aktorelement angreifende Schaltelemente vorgesehen.

In weiterer Ausgestaltung der Erfindung umfasst der Aktor zwei mit Längsseiten einander gegenüberliegende längliche Aktorelemente, die über einen gemeinsamen Trägerrahmen miteinander verbunden sind.

Vorzugsweise greifen an beiden Drehlagerungen beider Aktorelemente jeweils zwei Schaltelemente an.

Vorzugsweise ist der Aktor zur lokalen, in Längsrichtung begrenzten Verformung des Dichtungselemente, insbesondere eines extrudierten Dichtungsstrangs, vorgesehen.

Der Aktor kann zur Beaufschlagung eines schlauch- oder lippenförmigen Dichtungsabschnitts des Dichtungselements vorgesehen sein.

In einer besonders bevorzugten Ausführungsform ist der Aktor innerhalb eines schlauchförmigen Dichtungsabschnitts eines Dichtungsstrangs angeordnet.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine Dichtung nach der Erfindung in einer perspektivischen Ansicht,
- Fig. 2: die Dichtung von Fig. 1 in einer Schnittansicht, und
- Fig. 3: eine die Funktionsweise einer Aktorbaugruppe der Dichtung von Fig. 1 und 2 erläuternde Darstellung.

Ein extrudierter Dichtungsstrang aus Elastomermaterial weist einen U-förmigen Befestigungsabschnitt 1 mit einer metallischen Verstärkungseinlage 2 sowie aus weicherem Material als der Befestigungsabschnitt bestehende Dichtungsabschnitte 3 und 4 auf. Der Abschnitt 3 ist schlauchförmig, der Abschnitt 4 lippenförmig ausgebildet. Über den U-förmigen Befestigungsabschnitt 1 lässt sich der Dichtungsstrang auf einen Flansch 5 einer im Übrigen nicht gezeigten Fahrzeugkarosserie aufstecken.

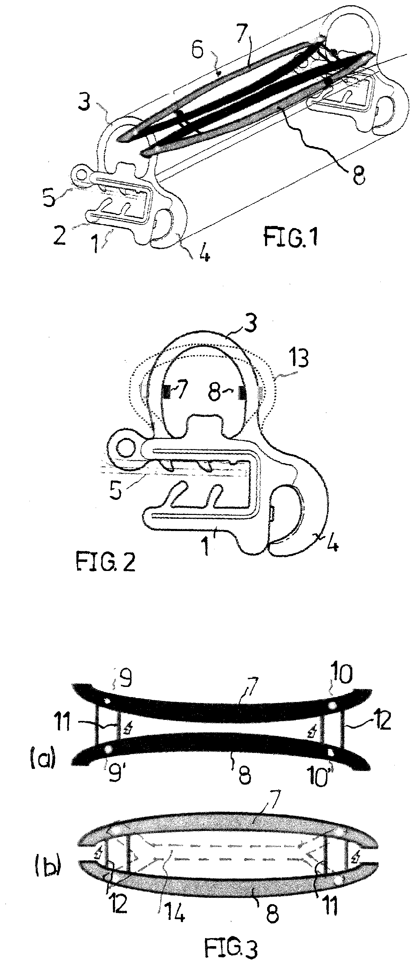

Im Innern des schlauchförmigen Dichtungsabschnitts 3 befindet sich ein Aktor 6, der elastisch biegbare Aktorelemente 7 und 8 umfasst, die mit Längsseiten einander gegenüberliegend im Abstand zueinander angeordnet sind und sich in ihrer Länge in Längsrichtung des Dichtungsstrangs erstrecken. Die Aktorelemente 7,8 sind bei 9 und 10 bzw. 9' und 10' drehbar an einem die Aktorelemente 7,8 verbindenden, in Fig. 3b durch Strichlinien angedeuteten starren Trägerrahmen 14 gehalten.

In Längsrichtung im Abstand von den Lagerungen 9,10 bzw. 9',10' greifen an den Aktorelementen 7,8 jeweils als Zugstränge ausgebildete Schaltelemente 11,12 an, die aus einem Formgedächtnismaterial bestehen und durch Stromfluss über Anschlussleitungen (nicht gezeigt) elektrisch beheizbar sind.

Der Aktor 6 befindet sich innerhalb des Dichtungsstrangs in einer Position, an der unter bestimmten Betriebsbedingungen des Fahrzeugs eine Einflussnahme auf die Form des schlauchförmigen Dichtungsabschnitts 3 erwünscht ist.

Wie Fig. 2 erkennen lässt, liegen die länglichen Aktorelemente 7,8, ggf. über (nicht gezeigte) Zwischenstücke, jeweils an der Innenseite der Schlauchwand des schlauchförmigen Dichtungsabschnitts 3 an. Einem unverformten Zustand des schlauchförmigen Dichtungsabschnitts 3 entspricht eine in Fig. 3a gezeigte erste Stellung des Aktors 6, in welcher die Aktorelemente 7,8 zwischen den räumlich durch den Trägerrahmen 14 festgelegten Drehlagerungen 9,10 bzw. 9',10' nach innen eingebogen sind. Indem die Länge der Aktorelemente 7,8 zwischen den Drehlagerungen 9,10 bzw. 9',10' den Abstand zwischen den Drehlagerungen übersteigt, ist diese erste Aktorstellung stabil.

Um den schlauchförmigen Dichtungsabschnitt 3 gemäß Punktlinien 13 in Fig. 2 zu verformen, kann von der stabilen ersten Aktorstellung gemäß Fig. 3a der Aktor 6 in eine zweite stabile Aktorstellung gemäß Fig. 3b überführt werden.

Hierzu werden die Schaltelemente 12 mit einem elektrischen Heizimpuls belegt, durch den sich die aus Formgedächtnismaterial bestehenden Schaltelemente zusammenziehen. Der Abstand des Angriffspunkts der Zugkraft von den Drehlagerungen 9,10 bzw. 9',10' ist so gewählt, dass es bei gleichzeitiger Dehnung der Schaltelemente 11 zu einer Verbiegung der Aktorelemente 7,8 derart kommt, dass die Aktorelemente in die in Fig. 3b gezeigte, nach außen gewölbte Stellung einschnappen und den schlauchförmigen Dichtungsstrang unter Abflachung entsprechend ausdehnen, wie dies aus Fig. 2 hervorgeht.

Bei gewünschter Aufhebung der Verformung des Dichtungsabschnitts 3 werden die Schaltelemente 11 mit einem elektrischen Heizimpuls belegt, so dass sie sich zu der in Fig. 3a gezeigten Länge zusammenziehen, wobei die Aktorelemente 7,8 aus der zweiten stabilen Aktorstellung gemäß Fig. 3b wieder in die erste stabile Aktorstellung gemäß Fig. 3a umschnappen und die Schaltelemente 12 wieder gedehnt werden.

Es versteht sich, dass der schlauchförmige Dichtungsabschnitt 3 an gewünschten Stellen z.B. durch variable Extrusion, mit Sitzen und Halteteilen zur Positionierung des Aktors 6 ausgebildet sein kann.

Ebenso können an solchen Stellen im Zuge der Extrusion Stromversorgungsleitungen und Anschlusselemente in das Strangmaterial eingebettet werden.

Es versteht sich, dass neben den hier als Beispiel beschriebenen extrudierten Strängen auch z.B. durch Spritzgießen hergestellte Formteile, insbesondere an extrudierte Stränge angespritzte Formteile, zur Verbindung mit einem Aktor in Betracht kommen, ggf. auch Formteile ohne Dichtfunktion.

## Patentansprüche

1. Dichtung, insbesondere an Türen, Klappen oder/und Fenstern von Fahrzeugkarosserien, mit einem elastisch verformbaren Dichtungselement in Form eines Dichtungsstrangs und einem Aktor (6) zur ferngesteuerten Verformung des Dichtungselements, wobei der Aktor (6) ein beheizbares Schaltelement (1 1,12) aus Formgedächtnismaterial und durch das Schaltelement (11, 12) elastisch biegbare längliche Aktorelemente (7; 8) umfasst, der Aktor (6) durch das Schaltelement (11,12) zwischen verschiedenen, durch Einschnappen oder/und Einrasten der Aktorelemente (7; 8) stabilisierten Aktorstellungen umschaltbar ist und die Aktorelemente (7;8) mit Längsseiten einander gegenüberliegend im Abstand zueinander angeordnet sind,
**dadurch gekennzeichnet,**
**dass** sich die länglichen Aktorelemente (7; 8) in Längsrichtung des Dichtungselements erstrecken und jeweils in zwei zueinander im Abstand angeordneten Längspositionen gehalten sind, wobei der Abstand zwischen den Längspositionen kleiner als die Länge der zwischen den Längspositionen gebogen verlaufenden Aktorelemente (7,8) ist.

2. Dichtung nach Anspruch 1,
**dadurch gekennzeichnet,**
**dass** das Schaltelement (11,12) als durch Beheizung verkürzbarer Zugstrang ausgebildet ist.

3. Dichtung nach Anspruch 1 oder 2,
**dadurch gekennzeichnet,**
**dass** der Aktor (6) mehrere, für unterschiedliche Umschaltrichtungen vorgesehene Schaltelemente (11,12) aus Formgedächtnismaterial aufweist.

4. Dichtung nach einem der Ansprüche 1 bis 3,
**dadurch gekennzeichnet,**
**dass** der Aktor (6) zwei, durch das Schaltelement (1 1,12) in entgegengesetzten Richtungen bewegbare Aktorelemente (7,8) umfasst.

5. Dichtung nach einem der Ansprüche 1 bis 4,
**dadurch gekennzeichnet,**
**dass** das Aktorelement an den Längspositionen um eine zur Längsrichtung senkrechte Achse drehbar gelagert ist.

6. Dichtung nach Anspruch 5,
**dadurch gekennzeichnet,**
**dass** das Schaltelement (11,12) im Abstand von der Achse mit dem Aktorelement (7,8) verbunden ist.

7. Dichtung nach einem der Ansprüche 5 oder 6,
**dadurch gekennzeichnet,**
**dass** zwei auf jeweils einer Seite der Achse im Abstand von der Achse an dem Aktorelement (7,8) angreifende Schaltelemente (11,12) vorgesehen sind.

8. Dichtung nach einem der Ansprüche 1 bis 7,
**dadurch gekennzeichnet,**
**dass** der Aktor (6) zwei mit Längsseiten einander gegenüberliegende längliche Aktorelemente (7,8) umfasst, die über einen gemeinsamen Träger (14) miteinander verbunden sind.

9. Dichtung nach Anspruch 8,
**dadurch gekennzeichnet,**
**dass** an beiden Drehlagerungen (9,10;9',10') beider Aktorelemente (7,8) jeweils zwei Schaltelemente (11,12) angreifen.

10. Dichtung nach einem der Ansprüche 1 bis 9,
**dadurch gekennzeichnet,**
**dass** der Aktor (6) zur lokalen, in Längsrichtung begrenzten Verformung des Dichtungselements vorgesehen ist.

11. Dichtung nach einem der Ansprüche 1 bis 10,
**dadurch gekennzeichnet,**
**dass** der Aktor (6) zur Beaufschlagung eines schlauch- oder lippenförmigen Dichtungsabschnitts (3) des Dichtungselements vorgesehen ist.

12. Dichtung nach einem der Ansprüche 1 bis 11,
**dadurch gekennzeichnet,**
**dass** der Aktor (6) zur Anordnung innerhalb eines schlauchförmigen Dichtungsabschnitts (3) des Dichtungselements vorgesehen ist.

## Claims

1. Seal, in particular on doors, flaps or/or windows of vehicle bodies, with an elastically deformable sealing element in the form of a sealing strand, and an actuator (6) for remote-control deformation of the sealing element, wherein the actuator (6) comprises a heatable switching element (11, 12) of shape memory material and elongate actuator elements (7; 8) that are elastically bendable by the switching element (11, 12), the actuator (6) can be switched over by the switching element (11, 12) between different actuator positions stabilized by the actuator elements (7; 8) snapping or/and latching into place, and the actuator elements (7; 8) are arranged with longitudinal sides opposite one another at a distance from one another, **characterized in that** the elongate actuator elements (7; 8) extend in the longitudinal direction of the sealing element and are each held in two longitudinal positions arranged at a distance from one another, wherein the distance between the longitudinal positions is smaller than the length of the actuator elements (7; 8) running in a curved manner between the longitudinal positions.

2. Seal according to Claim 1, **characterized in that** the switching element (11, 12) is embodied as a tension cord which can be shortened by heating.

3. Seal according to Claim 1 or 2, **characterized in that** the actuator (6) has a plurality of switching elements (11, 12) of shape memory material that are provided for different switching-over directions.

4. Seal according to one of Claims 1 to 3, **characterized in that** the actuator (6) comprises two actuator elements (7, 8) which are movable in opposite directions by means of the switching element (11, 12).

5. Seal according to one of Claims 1 to 4, **characterized in that** the actuator element is mounted at the longitudinal position so as to be rotatable about an axis perpendicular to the longitudinal direction.

6. Seal according to Claim 5, **characterized in that** the switching element (11, 12) is connected to the actuator element (7, 8) at a distance from the axis.

7. Seal according to either of Claims 5 and 6, **characterized in that** two switching elements (11, 12) are provided, said switching elements acting on the actuator element (7, 8) in each case on one side of the axis at a distance from the axis.

8. Seal according to one of Claims 1 to 7, **characterized in that** the actuator (6) comprises two elongate actuator elements (7, 8) which lie with longitudinal sides opposite each other and which are connected to each other via a common support (14).

9. Seal according to Claim 8, **characterized in that** in each case two switching elements (11, 12) act on the two rotary bearings (9, 10; 9', 10') of the two actuator elements (7; 8).

10. Seal according to one of Claims 1 to 9, **characterized in that** the actuator (6) is provided for the local deformation, which is limited in the longitudinal direction, of the sealing element.

11. Seal according to one of Claims 1 to 10, **characterized in that** the actuator (6) is provided for acting upon a tubular or lip-shaped sealing portion (3) of the sealing element.

12. Seal according to one of Claims 1 to 11, **characterized in that** the actuator (6) is provided for arranging within a tubular sealing portion (3) of the sealing element.

## Revendications

1. Joint d'étanchéité, en particulier au niveau de portes, d'abattants et/ou de fenêtres de carrosseries de véhicule, présentant un élément d'étanchéité élastiquement déformable sous forme d'un brin d'étanchéité et un actionneur (6) pour la déformation commandée à distance de l'élément d'étanchéité, l'actionneur (6) comprenant un élément de commutation (11, 12) pouvant être chauffé en matériau à mémoire de forme et des éléments d'actionneur (7 ; 8) allongés pouvant être pliés élastiquement par l'élément de commutation (11, 12), l'actionneur (6) pouvant être commuté par l'élément de commutation (11, 12) entre différentes positions d'actionneur stabilisées par clipsage et/ou encliquetage des éléments d'actionneur (7 ; 8) et les éléments d'actionneur (7 ; 8) étant disposés à une certaine distance l'un de l'autre, leurs côtés longitudinaux se faisant face, **caractérisé en ce que** les éléments d'actionneur (7 ; 8) allongés s'étendent dans la direction longitudinale de l'élément d'étanchéité et sont à chaque fois tenus dans deux positions longitudinales disposées à une certaine distance l'une de l'autre, la distance entre les positions longitudinales étant inférieure à la longueur des éléments d'actionneur (7, 8) s'étendant de manière incurvée entre les positions longitudinales.

2. Joint d'étanchéité selon la revendication 1, **caractérisé en ce que** l'élément de commutation (11, 12) est conçu comme une chaîne de traction pouvant être raccourcie par chauffage.

3. Joint d'étanchéité selon la revendication 1 ou 2, **caractérisé en ce que** l'actionneur (6) présente plusieurs éléments de commutation (11, 12) en matériau à mémoire de forme prévus pour différentes directions de commutation.

4. Joint d'étanchéité selon l'une quelconque des revendications 1 à 3, **caractérisé en ce que** l'actionneur (6) présente deux éléments d'actionneur (7, 8) pouvant être déplacés dans des directions opposées par l'élément de commutation (11, 12).

5. Joint d'étanchéité selon l'une quelconque des revendications 1 à 4, **caractérisé en ce que** l'élément d'actionneur est logé au niveau des positions longitudinales de manière rotative autour d'un axe perpendiculaire à la direction longitudinale.

6. Joint d'étanchéité selon la revendication 5, **caractérisé en ce que** l'élément de commutation (11, 12) est relié à l'élément d'actionneur (7, 8) à une certaine distance de l'axe.

7. Joint d'étanchéité selon l'une quelconque des revendications 5 ou 6, **caractérisé en ce que** deux éléments de commutation (11, 12) sollicitant l'élément d'actionneur (7, 8) sur à chaque fois un côté de l'axe à une certaine distance de l'axe sont prévus.

8. Joint d'étanchéité selon l'une quelconque des revendications 1 à 7, **caractérisé en ce que** l'actionneur (6) comprend deux éléments d'actionneur (7, 8) allongés se faisant face par les côtés longitudinaux, qui sont reliés l'un à l'autre via un support commun (14).

9. Joint d'étanchéité selon la revendication 8, **caractérisé en ce qu'**à chaque fois deux éléments de commutation (11, 12) sollicitent les deux paliers rotatifs (9, 10 ; 9', 10') des deux éléments d'actionneur (7, 8).

10. Joint d'étanchéité selon l'une quelconque des revendications 1 à 9, **caractérisé en ce que** l'actionneur (6) est destiné à la déformation locale, limitée dans la direction longitudinale, de l'élément d'étanchéité.

11. Joint d'étanchéité selon l'une quelconque des revendications 1 à 10, **caractérisé en ce que** l'actionneur (6) est destiné à solliciter une section d'étanchéité (3) en forme de tuyau ou de lèvre de l'élément d'étanchéité.

12. Joint d'étanchéité selon l'une quelconque des revendications 1 à 11, **caractérisé en ce que** l'actionneur (6) est destiné à être disposé dans une section d'étanchéité (3) en forme de tuyau de l'élément d'étanchéité.
